(19) **Europäisches Patentamt / European Patent Office / Office européen des brevets**

(11) **EP 1 730 587 B1**

(12) **EUROPEAN PATENT SPECIFICATION**

(45) Date of publication and mention of the grant of the patent:
**01.09.2010 Bulletin 2010/35**

(21) Application number: **05718020.0**

(22) Date of filing: **14.03.2005**

(51) Int Cl.:
$G03B\ 13/36^{(2006.01)}$ $G02B\ 7/09^{(2006.01)}$
$G02B\ 7/28^{(2006.01)}$

(86) International application number:
**PCT/GB2005/000964**

(87) International publication number:
**WO 2005/091067 (29.09.2005 Gazette 2005/39)**

(54) **CAMERA AUTOFOCUS**

AUTOFOKUS FÜR KAMERA

MISE AU POINT AUTOMATIQUE DE CAMERA

(84) Designated Contracting States:
**AT BE BG CH CY CZ DE DK EE ES FI FR GB GR HU IE IS IT LI LT LU MC NL PL PT RO SE SI SK TR**

(30) Priority: **15.03.2004 GB 0405773**
**10.08.2004 GB 0417762**

(43) Date of publication of application:
**13.12.2006 Bulletin 2006/50**

(73) Proprietor: **Cambridge Mechatronics Limited**
**Cowley Road**
**Cambridge CB4 0WS (GB)**

(72) Inventors:
• **HOOLEY, Anthony**
  **Cambridge CB4 1HP (GB)**
• **RICHARDS, David, Charles, William Milton,**
  **Cambridge CB4 6BL (GB)**
• **ALLAN, James**
  **Bury St. Edmunds,**
  **Suffolk IP28 6QU (GB)**

• **LEEDHAM, Robert, John**
  **Cambridge CB1 8SJ (GB)**
• **SHEPHERD, Mark, Richard**
  **Royston**
  **Hertfordshire SG8 6BL (GB)**

(74) Representative: **Merryweather, Colin Henry et al**
**J.A. Kemp & Co.**
**14 South Square**
**Gray's Inn**
**London WC1R 5JJ (GB)**

(56) References cited:
**US-A- 4 470 683**

• **PATENT ABSTRACTS OF JAPAN vol. 2000, no. 13, 5 February 2001 (2001-02-05) & JP 2000 292683 A (CANON INC), 20 October 2000 (2000-10-20)**
• **PATENT ABSTRACTS OF JAPAN vol. 2003, no. 12, 5 December 2003 (2003-12-05) & JP 2004 205742 A (FUJI PHOTO FILM CO LTD), 22 July 2004 (2004-07-22)**

EP 1 730 587 B1

**Description**

The present invention relates to cameras and in particular to autofocussing of cameras.

Cameras use a lens arrangement to focus light onto an image receiving element which may be a film or in the case of a digital camera an image sensor, for example a charge-coupled device (CCD). Variable focus is desirable as otherwise the camera is limited to having a small aperture lens arrangement to achieve a sufficient range of focus. Variable focus of cameras may be achieved by use of a movable lens arrangement which is moved to vary the focus. Alternatively, variable focus may be achieved by use of a lens arrangement such as a liquid lens, the focus of which is variable electrically.

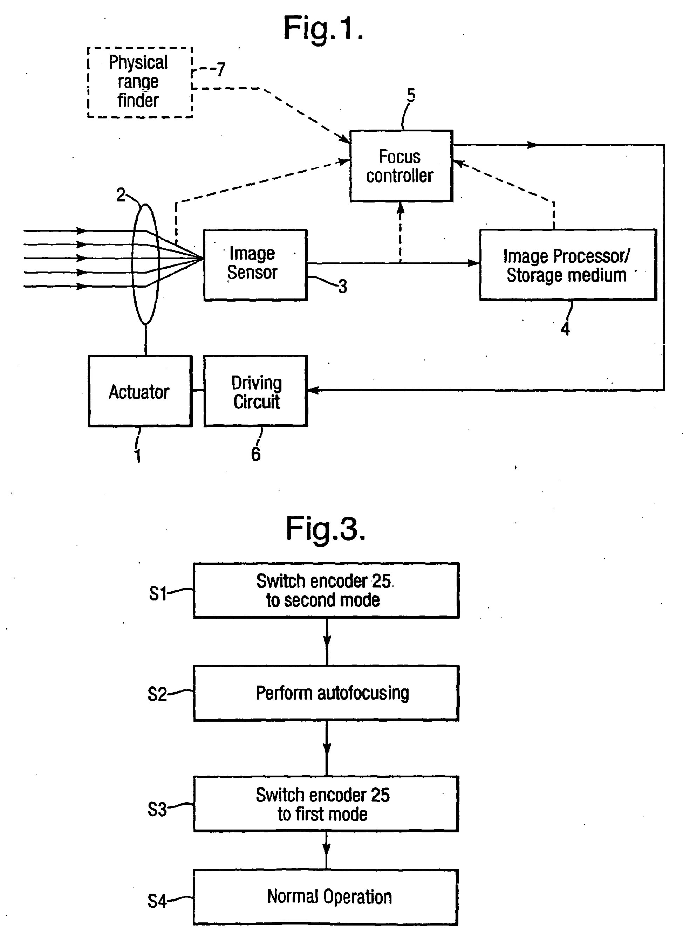

Many elements of autofocussing cameras are very well known. Autofocussing (AF) camera systems have been described in broad terms many times. Fig.1 shows a general schematic representative of known types of AF camera which employ an actuator 1 to move a lens arrangement 2 which focusses light onto an image sensor 3. The image sensor 3 outputs an image signal to an image processor 4 which may include a storage medium. A focus controller 5 controls movement the lens arrangement 2 by outputting a control signal to a drive circuit 6 which supplies a drive signal to the actuator 1. The focus controller 5 controls the focus based on information from any of a number of sources as shown by the dotted arrows in Fig. 1 to find the best focus position.

The focus controller 5 may use information from a physical range finder 7, for example an ultrasonic range finder (using a time-of-flight calculation) or an infra-red range finder (using a reflected luminance which is proportional to the square of the distance).

The focus controller 5 may use information from optical elements placed in the optical path before the sensor, such as the shallow prisms or 'microscreens' found in SLR cameras. These can be analysed by a separate image sensor.

The focus controller 5 may analyse the image signal output by the image sensor 3. This generally involves two separate processes. The first process is to determine a measure of the focus quality of an image. The second process is to control the focus of the lens arrangement 2 based on the determined measure of the focus quality, in accordance with some algorithm, for example to maximise the measure.

Various measures of the focus quality of an image determined from the image signal are known. One type of measure is based on high spatial frequency content of an image. This type of measure is used on the basis that the high spatial frequency components increase with better focus. A first possibility is to integrate the modulus of high-pass filtered image data. A second possibility is to convolve the image signal with a high pass filter and find the power of the result. A third possibility is to perform a frequency domain transform (such as FFT or DCT) and apply a frequency domain filter and sum the power. These techniques all achieve the described effect, but behave very differently.

Another type of measure is based on statistics derived from the image signal, for example entropy measures and conversely compressibility of the image signal or a histogram or saturated pixel count.

When variable focus is achieved by use of a movable lens arrangement, a piezoelectric actuator may be used to drive the movement of the lens. Use of a piezoelectric actuator provides various advantages over the use of an electric motor. One possible form of piezoelectric actuator is disclosed in WO-01/47041 and may be used in a camera as disclosed in WO-02/103451 on which the two part form of the claims is based.

However, piezoelectric actuators commonly experience the problem of hysteresis in the drive signal input verses displacement output characteristic. This causes hysteresis in the position to which the lens arrangement is driven as a function of the control signal used to control the actuator. Hysteresis can be thought of as a process which has persistent state so that the behaviour at any moment in time depends on a history of preceding actions. Hysteresis causes a practical problem in the context of autofocussing because this involves variance of the control signal to bring the lens arrangement to the position in which the focus is best, or at least acceptable. However the result of hysteresis is that there is not in general a single value of the control signal corresponding to any given position such as the position of best focus. In practical terms, this makes it difficult to select the control signal necessary to bring the lens arrangement into focus.

US-4,470,683 discloses a camera comprising an image sensor and a lens which focusses an image onto the image sensor. Movement of the lens to vary the focus is driven by a motor which rotates a gear which meshes with a rack integrally provided on the lens. A CPU applies a control signal to the motor to automatically focus the image on the basis of an evaluation value derived from the output of the image sensor. Hysteresis is applied to the decision levels used by the CPU to determine if the image is focussed, in order to prevent an extraneous fluctuation causing a small but rapid change in the decision output.

According to a first aspect of the present invention, there is provided a method of focussing a lens arrangement in a camera which further comprises an image sensor onto which an image is focussed by the lens arrangement and a piezoelectric actuator arranged to drive movement of the lens arrangement in accordance with a control signal applied thereto to vary the focus of the image on the image sensor, the piezoelectric actuator experiencing hysteresis in the position to which it drives the lens arrangement as a function of the control signal, the method comprising: applying a control signal to the piezoelectric actuator with a value at an extreme of a predetermined range; changing the control signal monotonically across the predetermined range and at each of a plurality of test values of the control signal during the change of the control signal determining a respective measure of the quality of the focus of the image from the image signal output by the image sensor; determining, from said respective measures of the quality of the focus of the image, a focus value of the control signal at which the quality of the focus of the image is at an acceptable level; changing the control signal back to said value at an extreme of said predetermined range; and changing the control signal monotonically to said focus value.

Further according to the first aspect of the present invention, there is provided a camera in which such a method is implemented.

According to a second aspect of the present invention, there is provided a method of focussing a lens arrangement in a camera which further comprises an image sensor onto which an image is focussed by the lens arrangement and a piezoelectric actuator arranged to drive movement of the lens arrangement in accordance with a control signal applied thereto to vary the focus of the image on the image sensor, the piezoelectric actuator experiencing hysteresis in the position to which it drives the lens arrangement as a function of the control signal, the method comprising: applying a control signal to the piezoelectric actuator with a value at an extreme of a predetermined range; changing the control signal monotonically across the predetermined range and at each of a plurality of values of the control signal during the change of the control signal determining respective measure of the quality of the focus of the image from the image signal output by the image sensor; determining, from said respective measures of the quality of the focus of the image, a focus value of the control signal at which the quality of the focus of the image is at an acceptable level; determining a modified value of the control signal which is capable, by monotonic change of the control signal to the modified value, of moving the lens arrangement to the position at which it was located when the control signal was at the focus value of the control signal, taking into account the hysteresis of the piezoelectric actuator; and changing the control signal monotonically to said modified value.

Further according to the second aspect of the present invention, there is provided a camera in which such a method is implemented.

Both the first and second aspects involve initially applying a control signal at an extreme of a predetermined range and then changing the control signal momotonically across the predetermined range to determine a measure of focus quality at each of a plurality of test values of the control signal.

As the focus control is always performed across the same predetermined range, the control signal never goes beyond the extreme of the range initially used. Advantage is taken of an observation of the physical phenomenon that when a piezoelectric actuator is operated with the control signal exclusively in a predetermined range, the position of the actuator at one end of the range tends to become the same position after a period of operation in the range. Thus the position at the extreme value of the control signal is repeatedly reached, at least after a few operations of the autofocussing control. This in turn means that the positions of the lens as the control signal is varied across the range are also the same every time the focus control is performed, as a result of the change being monotonic. This makes it possible to return the lens arrangement to one of those positions determined to provide the best, or at least an acceptable, focus quality, based on a determination of a focus value of the control signal during the initial scan at which the measure of the quality of the focus of the image is at an acceptable level.

However the first and second aspects of the present invention use slightly different techniques for returning to the desired position, as follows.

In accordance with the first aspect of the present invention, the control signal is changed back to said value at an extreme of said predetermined range, and then the control signal is changed monotonically to said focus value. This returns the lens arrangement back to the same position at which it was located when the control signal was at the focus value as the position at the extreme value of the control signal is the same and the path followed by the actuator is the same.

In contrast, the second aspect of the present invention does not require such a fly-back to the extreme value of the control signal and instead uses knowledge of the hysteretic properties of the piezoelectric actuator. In particular, there is determined a modified value of the control signal which is capable, by monotonic change of the control signal to the modified value, of moving the lens arrangement to the position at which it was located when the control signal was at the focus value of the control signal, taking into account the hysteresis of the piezoelectric actuator. This enables return to the same position simply by changing the control signal monotonically to said modified value.

To allow better understanding, embodiments of the present invention will now be described by way of non-limitative example with reference to the accompanying drawings, in which:

Fig. 1 is a schematic representation of some known autofocussing cameras;
Fig. 2 is a block diagram of a camera;
Fig. 3 is a flowchart of the operation of the camera of Fig. 2
Fig. 4 is a graph of position vs. control signal for a piezoelectric actuator experiencing hysteresis;
Fig. 5 is a flow chart of an autofocussing method;
Fig. 6 is a graph of position vs. control signal for a piezoelectric actuator operated in accordance with the autofocussing method of Fig. 5;
Figs. 7 to 11 are flow charts of various specific autofocussing operations.

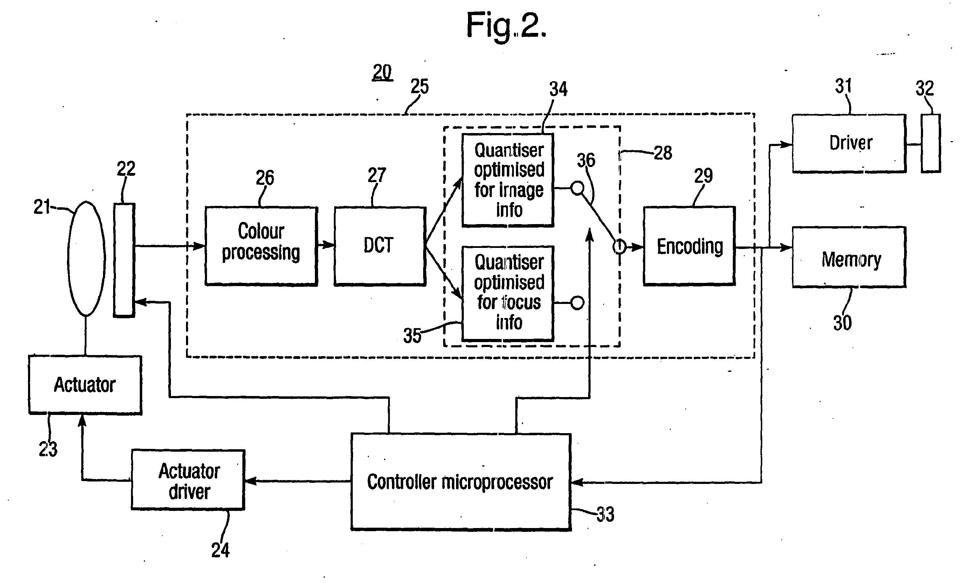

There will first be described a camera 20 which is shown in Fig. 2.

The camera 20 has a variable focus lens arrangement 21 which focusses light onto an image sensor 22 which in turn produces a video image signal in response to the incident light. The variable focus lens arrangement 21 is movable to vary the focus. Such movement is driven by an actuator 23. The actuator 23 may be a piezoelectric device, for example as of the type disclosed in WO-01/47041 which can drive movement of the lens arrangement 21 as disclosed in WO-02/103451. In this case, the lens arrangement 21 may be suspended using a suspension system incorporating the actuator 23 as disclosed in WO-2005/003834.

The actuator 23 is driven by a control signal supplied by a drive circuit 24.

The image signal from the image sensor 22 is supplied to a JPEG encoder 25 which is operable to encode the image signal in accordance with the JPEG standard. This encoding involves lossy compression. In particular, the JPEG encoder 25 comprises the following components.

The image signal is first supplied to a colour processing block 26 which performs post-processing of the image signal from the image sensor 22.

The image signal is then supplied to a discrete cosine transformation block 27 which performs a discrete cosine transformation of the image signal into spatial frequency components.

The spatial frequency components are supplied to a quantisation block 28 which quantises the spatial frequency components in accordance with a matrix of quantisation levels in respect of respective spatial frequency components. The quantisation block 28 is operated in a manner described in more detail below.

The quantised spatial frequency components are supplied to an encoder block 29 which encodes the quantised spatial frequency components, for example using a run-length encoding scheme.

The output of the encoder block 29 is supplied as the encoded signal output by the JPEG encoder 25. The encoded signal may be supplied to any other components of the camera, for example to a memory 30 for storage or to a driver 31 arranged to process the encoded signal for display of the image on a display 32.

The camera 20 operates under the control of a control circuit 33 usually implemented by a microprocessor running an appropriate program. The JPEG encoder may be implemented in hardware or in software by a microprocessor running an appropriate program, which may be the same microprocessor used to implement the JPEG encoder.

The operation of the quantisation block 28 will now be described in more detail. The quantisation block is capable of operating in two modes in which a different quantisation matrix is applied. The selection of the mode is performed by the control circuit 33. In Fig. 2 this is illustrated as being achieved by the quantisation block 28 comprising two quantiser blocks 34 and 35 each performing quantization in accordance with a different quantisation matrix and a switch 36 switchable to select the output of one of the quantiser blocks 34 and 35 as the output of the quantisation block 28, the switch 26 being controlled by the control circuit 33. As an alternative, the quantisation block 28 could be controlled by the control circuit 33 selectively changing the quantisation matrix used by the quantisation block 28.

The two quantisation matrices used in the two modes of operation of the quantisation block 28 are as follows. In the first mode the quantisation block 28 uses a quantisation matrix of the type normally selected in a JPEG encoder in accordance with the JPEG standard. As an example, one possible form for the quantization matrix is set out above in the discussion of the present invention. In such a quantisation matrix, the low spatial frequency components are preserved preferentially, as compared to the high spatial frequency components. This is done in order to perform compression whilst preserving the low spatial frequency components which is the information in the image signal most important for a visually acceptable image. Effectively this involves discarding of information contained in the high spatial frequency components. As a result the encoded signal output by the JPEG encoder 25 in this mode of operation is not reliable as providing information on the quality of focus which affects most significantly the high spatial frequency components.

In the second mode the quantisation block 28 uses a quantisation matrix which preserves high spatial frequency components preferentially, as compared to the first mode. The quantisation matrix is therefore selected to preserve information which is useful for determining the focus quality of the image signal. In principle the quantization matrix in the second mode may take any form which preserves the high spatial frequency components useful for providing information on focus quality, but the design may be simplified by using a quantization matrix which is the reciprocal of a high-pass filter. This allows use of any high-pass filter which extracts high frequency components useful for determining the focus quality.

One possible high-pass filter is a Laplacian of a Gaussian filter. The continuous version of this function is:

$$f(x,y) = \frac{\left(x^2 + y^2 - 2r^2\right)e^{\frac{x^2+y^2}{2r^2}}}{r^4}$$

where $x$ and $y$ are spatial co-ordinates, $f(x,y)$ is the spatial domain filter, and r is the radius of the Gaussian blur. The Laplacian is a differential operator which gives increasing gain with frequency. The Gaussian is a blur operation which rolls off the gain at high frequency. One advantage of this filter design is that it is easy to understand its operation in terms of spatial performance. The Gaussian blur radius r is specified in pixels and is related to the size of the smallest detail that is believed to be "real" (and not noise) in the image. Another advantage of this function is that it is circularly symmetric. After transformation by a discrete cosine transformation, image components which correspond to asymmetric cosines must become zero, that is about 75% of the resulting coefficients. Additionally, the resulting coefficient matrix must be symmetric which potentially halves the number of multiplies. As an example, with a matrix of 8 by 8 values, after the transformation there are 18 non-zero values and the symmetry reduces the number of multiplies to 9. Furthermore, coefficients can be scaled such that they can be reasonably represented in the form $2^n$, that is a shift operation in a binary digital processor, or some simple combination of a few shift and add operations.

An example of the quantisation matrix which is the reciprocal of the Laplacian of a Gaussian filter is:

| M | M | 43 | M | 22 | M | 34 | M |
|---|---|----|---|----|---|-----|---|
| M | M | M  | M | M  | M | M   | M |
| 43 | M | 19 | M | 16 | M | 27 | M |
| M | M | M  | M | M  | M | M   | M |
| 22 | M | 16 | M | 20 | M | 42 | M |
| M | M | M  | M | M  | M | M   | M |
| 34 | M | 27 | M | 42 | M | 103 | M |
| M | M | M  | M | M  | M | M   | M |

where M represents the maximum possible quantisation. This quantisation matrix is given for just one scaling at one Gaussian radius value $r$, but of course other values of these parameters could be used. It is believed that the quality of result is not strongly dependent on the scaling of the quantiser matrix, and therefore there are many valid variants of this matrix.

As the second mode results in the preservation in the encoded signal of high spatial frequency components which provide useful information on the focus quality, the control circuit 33 uses the amount of data in the encoded signal when the JPEG encoder 25 is in the second mode as a measure of the quality of focus. The amount of data increases as the quality of focus increases because focussing by its very nature increases the magnitude of the high frequency components. Thus a lower degree of compression and hence a higher amount of data occurs as the focus improves. Use of the alternative quantisation matrix in the second mode provides a better measure than if the normal quantisation matrix is applied, as in the first mode, because the normal quantisation matrix discards information which is relevant to focussing.

To illustrate this, the autofocus operation of the camera 20 performed by the control circuit 33 is shown in Fig. 3.

Firstly, in step S1 the control circuit 33 switches the JPEG encoder 26 into the second mode so that the encoded signal is derived using the quantisation matrix which preserves high spatial frequency components containing information useful for focussing.

Next, in step S2 autofocussing is performed using the amount of data in the encoded signal output from the JPEG encoder 25 as a measure of focus quality. The autofocussing step S2 is described in more detail below but results in the actuator 23 being controlled to move the lens arrangement 21 to the position of best focus or at least a position where the focus is acceptable.

After autofocussing in step S2 has been completed, in step S3 the control circuit 33 switches the JPEG encoder 25 into the first mode so that the encoded signal is derived using the quantisation matrix which preserves low spatial frequency components containing information which provides an image of good visual quality so far as possible. Subsequently, in step S4 the camera is operated normally to cause the JPEG encoder 25 to output encoded signals representing images captured by the image sensor 22.

Although the camera 20 is described as including a JPEG encoder in accordance with the JPEG standard, it could equally be applied to other types of encoder which provide lossy compression of the image signal output by the image sensor 22.

There are, of course, a variety of loss mechanisms which have been specified in many common image compression standards. Some of these cannot be adapted for the purposes of preferentially preserving focus information to image information, for example, where they relate to colour depth reduction or chroma subsampling which are normally fixed as part of the compression standard. However many of the loss mechanisms are controllable loss mechanism, as in the quantisation performed in the JPEG standard. In most cases, the principal controllable loss mechanism is a quantisation or a threshold operation, it being noted that a threshold operation can be thought of as a special case of quantisation. Of course, other controllable loss mechanisms are conceivable and may be used. For example, it is possible to drop low probability codes in the entropy coding of the stream and the present technique could be applied to that.

The present technique may be applied to other encoding schemes by controlling the variable loss mechanism to operate differently in two modes of operation, the first preserving low spatial frequency components containing information which provides an aesthetically pleasing image and the second preserving high spatial frequency components containing information which is useful for focussing.

In general, more than one setting may be necessary in the second mode because the optimal setting may change with parameters such as the overall scene light level as high-pass filtered images are sensitive to noise, and pictures tend to become noisier at low light level. This can be detected through the exposure time of the image sensor 22, and the effective high-pass filter can be switched on the basis thereof, for example to a less aggressive high frequency gain as the exposure time increases.

The settings in the two modes, for example the quantisation matrices in the camera 20, can either be designed from knowledge of the desired spatial response or frequency response or they could be derived by direction optimisation of heuristic criteria, for example by running trial data sets which have had notional scores of focus quality and aesthetic value attached, and then varying the parameters of the controllable loss mechanism until there is a correlation. The latter method is more suited to controllable loss mechanisms in which the action of the loss mechanism cannot be trivially inverted into a source image manipulation.

As an example of another encoding scheme, the technique can be applied to a wavelet compression scheme, such as a 3 level recursive Discrete Wavelet Transform using a Daubechies 6th order polynomial. In this case, the loss mechanism may be controlled by variation of a threshold to which the transformed image signal is subjected to remove (force to zero) a certain proportion of the wavelet coefficients. Wavelet transforms have an interesting side-property that some spatial location is preserved at every frequency scale. It is therefore easy to select a region of interest within the image by zeroing out wavelet coefficients corresponding to spatial locations outside the region of interest.

The autofocussing step S2 will now be described in detail.

In the camera 20 the control signal applied by the drive circuit 24 to the actuator 23 is a voltage signal. Preferably the actuator 23 is a piezoelectric actuator as described above. The piezoelectric material in such an actuator 23 typically exhibits hysteresis and this generates a problem in autofocussing.

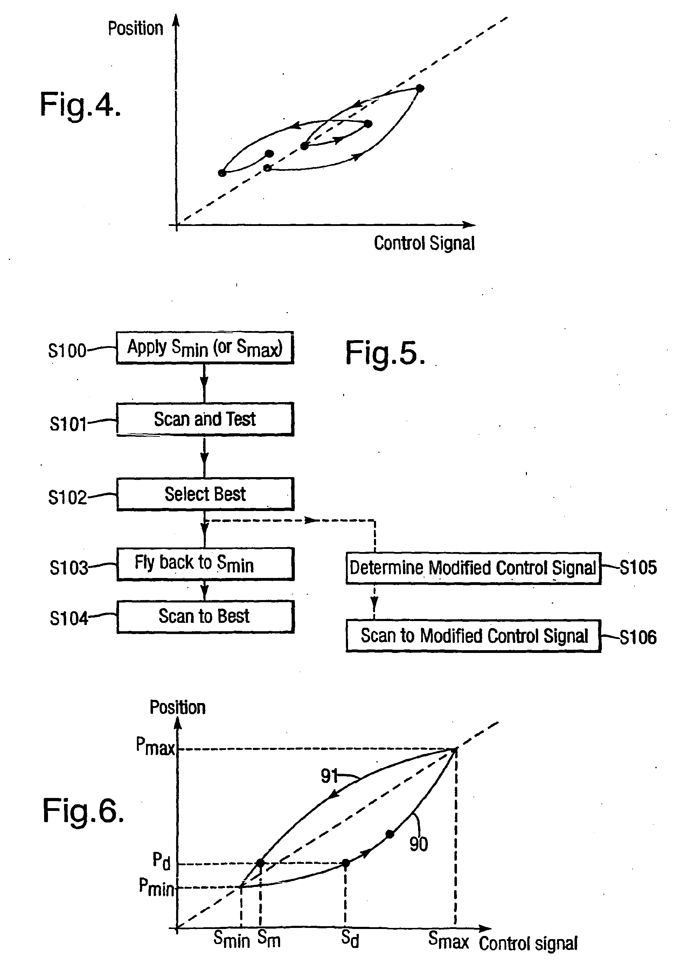

The nature of the hysteresis is illustrated in Fig. 4 which is a graph of the position to which the lens arrangement 21 is moved as a function of the control signal. In particular, the position does not depend linearly on the value of the control signal (for example along the dotted line) but instead the position depends on the history of the changes in the control signal. Fig. 4 illustrates a series of positive and negative changes in the control signal. The control signal starts and finishes at the same value but the position starts and finishes at different values. Hysteresis means that the position of the lens arrangement 21 at any given point in time is not in general known from the control signal which is the only parameter being controlled. This makes it difficult to perform autofocussing because the position of the lens arrangement 21 determined to give the best focus, or at least an acceptable focus, cannot easily be returned to.

However, the camera 20 deals with this problem of hysteresis by performing the autofocussing step using a method which will now be described with reference to the flow chart shown in Fig. 5.

The method relies on always applying a control signal within a predetermined range and makes use of a physical phenomenon illustrated in Fig. 6 which is a graph of the position to which the lens arrangement 21 is moved as a function of the control signal. In Fig. 6, the extreme values of the predetermined range for the control signal are $S_{MIN}$ and $S_{MAX}$. It is observed that when the control signal remains within the predetermined range, after an initial period of stabilisation, the piezoelectric actuator 23 enters a state in which the position at the ends of the predetermined range tends to respective constant values, shown as $P_{MIN}$ and $P_{MAX}$ in Fig. 6. Thus, whenever the control signal is changed to one of the extreme values $S_{MIN}$ or $S_{MAX}$, the position changes to the same value $P_{MIN}$ or $P_{MAX}$, respectively. Similarly, when the control signal is changed monotonically from one of the extreme values $S_{MIN}$ or $S_{MAX}$, the position changes along the same curve 90 or 91, respectively. Thus it is possible to drive the lens arrangement 21 to the same positions repeatably and predictably by first applying a control signal at one of the extreme values $S_{MIN}$ or $S_{MAX}$ and then changing the control signal monotonically. This effectively provides knowledge about the relative position of the lens arrangement 21 which is used by the autofocussing method, as follows. The repeatable changes only occur after an initial period of operation in the predetermined range of the control signal. However, in practice, this stabilisation occurs after a relatively small number of cycles of the autofocussing method.

In the autofocussing method, initially in step S100 the applied control signal is one of the extreme values $S_{MIN}$ or $S_{MAX}$. This may require the control signal to be changed, or in some embodiments the control signal may already be at the appropriate value, for example because this is the rest state of the piezoelectric actuator 23. For simplicity, there will be described the case that the lowermost extreme value $S_{MIN}$ is used initially and the control signal is subsequently raised, but alternatively the uppermost extreme values $S_{MAX}$ can be used initially in which case the following still applies but applying increases instead of decreases and vice versa.

Next in step S101, the control signal is changed monotonically across the predetermined range. This scans the lens arrangement 21 across a corresponding range of positions. At each of a plurality of test values of the control signal across the predetermined range, the measure of focus quality is determined and stored. The test values may be disposed linearly across the predetermined range but this is not necessary. Alternatively the test values may be unequally spread, for example concentrated in a particular part of the range. At the end of step S101, the control signal is at $S_{MAX}$, so the position of the lens arrangement 21 is $P_{MAX}$.

In Step S102, the determined measures of focus quality are used to derive a focus value of the control signal at which the focus quality is at an acceptable level. Most simply this is done by selecting the one of the plurality of test values having the best measure of focus quality. As an alternative, it is possible to predict the value of control signal providing the best focus from the test values using a curve-fitting technique. Thus the focus value need not be one of the test values. The curve fit can be by a simple arithmetic equation, such as an Mth order polynomial, where M>1, or instead could be chosen as a best-fit to a curve taken from a library of curves pre-measured from representative scenes. There are numerous enhancements which can be made to such a scheme, for example:

- In the case where the estimate is taken from an ensemble of representative scenes, then the algorithm can learn over time, appropriate scales and offset values. That is, the physical unit will differ from the reference unit with which the data ensemble was recorded (due to mechanical and material tolerances). The algorithm can develop a model of how the library values map to the actual values required for a particular system.

- Bayes theorem is a powerful tool in this context. The distribution of errors between the 'correct' measures of focus quality for a scene and the measured measures of focus quality (which is perturbed by instantaneous factors such as noise) can be reasonably well estimated. Even in the case of simple 'hill climbing', Bayes Theorem provides a method for distinguishing signal from noise.

Although Steps 101 and 102 are illustrated separately in Fig. 5, step S102 could be performed at least in part during the scan performed in Step S101.

For the reasons set out above, the position at which the lens arrangement was located when the control signal was at the focus value during the scan of Step S101 is known, at least relative to the positions $P_{MIN}$ and $P_{MAX}$ at the extremes of the predetermined range. For example in the case that the focus value of the control signal is Sd shown in Fig. 6, then the position is Pd. Thus it is straightforward to return to that position. Two alternative ways to do this are shown in Fig. 5, namely by performing steps S103 and S104 or by performing steps S105 and S106.

In the first alternative, the method proceeds to step S103 in which the control signal is changed back to the initially applied extreme value of the control signal $S_{MIN}$ or $S_{MAX}$. Thus the lens arrangement returns to the same position as it occupied as a result of step S100. Thus, this alternative is referred to as a fly-back technique. The control signal may be changed during this fly-back step S103 at a greater rate than during the scan step S101 because it is not necessary to perform any calculations to determine the measures of focus quality.

Next in step S104, the control signal is changed monotonically to the focus value determined in step S102. This causes the position of the lens arrangement to change along the same curve as during the scan step S101 (for example along curve 90) and hence to arrive at the position at which it was previously located when the control signal was at the focus value (for example Pd if the focus value is Sd). Accordingly, the fly-back technique returns the lens arrangement back to the position determined in step S102 in a reliable manner despite the hysteresis of the piezoelectric actuator.

The autofocussing method employing a fly-back technique can operate very quickly, and in particular, in a usefully short time. This can be demonstrated by considering for example a camera 20 with an F2.8 aperture and a focussing lens arrangement 21 with focal length of 4.25mm. For a 3.6um pixel-pitch sensor, we can set the circle of confusion to 10.2um, i.e. the diagonal of a $2{\times}2$ pixel block, the smallest all-colour imaging element in a colour sensor. With these constrains, the range of focus from 10cm to infinity can be covered in 4 depth-of-field ranges (centred at 117mm, 169mm, 292mm and 633mm). To allow for the non-ideal characteristics of the total optical system, such as gravity, hysteresis, angular tolerance between lens and sensor etc, it would be prudent to allow for 6 depth-of-field ranges. In good light conditions so that the exposure time is short compared with the frame time, the device movement between adjacent depth-of-field ranges can be completed in the non-exposed portion of one frame when running at 30fps or slower, a frame rate which is common in such cameras. Experiments have shown that a fly-back time as small as 15ms works correctly. Therefore the method can complete in the following time:

1×15ms (for initial fly-back in step S100 if necessary)

+ 6×33ms (to scan and test in step S101)

+ 1×15ms (for fly-back in step S103)

+ 1×33ms (to return the to focus position in step 104)

= 261 ms

This autofocus cycle time, just over ¼ second, compares very favourably with many alternative systems.

However, the second alternative reduces the cycle time by avoiding the fly-back of step S103 and instead changing the control signal directly to the appropriate value which may be determined based on a knowledge of the properties of the piezoelectric actuator 23. In particular, in S105 there is determined a modified value of the control signal capable, on monotonic change of the control signal to the modified value, of moving the lens arrangement 21 from its current position at the end of step S101 to the position at which it was located during the scan step S101 when the control signal was at the focus value determined in step S102. In general in the example of Fig. 6 the modified value of the control signal may be derived from the curves 90 and 91. For example, in the case that the focus value of the control signal is Sd, the position of the lens arrangement 21 when the control signal was Sd during the scan step S101 is Pd and the modified value of the control signal is Sm.

Thus the modified value may be determined from the properties of piezoelectric actuator 21 because of the operation within the predetermined range, as described above. The determination of the modified value is straightforward because the material properties can be well controlled in a production situation. In general, the determination may be performed using a look-up table stored in the camera 20 or brute calculation of hysteresis estimates. In the case of a look-up table, the knowledge of the hysteretic properties are used to derive the values stored in the table in advance. Where calculation is performed in the camera 20, the knowledge of the hysteretic properties is embodied in the calculations stored in the camera 20.

In principle, the determination of a modified value of the control signal may also take into account other factors such as changes in the environmental conditions of the unit (particularly temperature), the orientation, location of end stops and other physical and mechanical parameters.

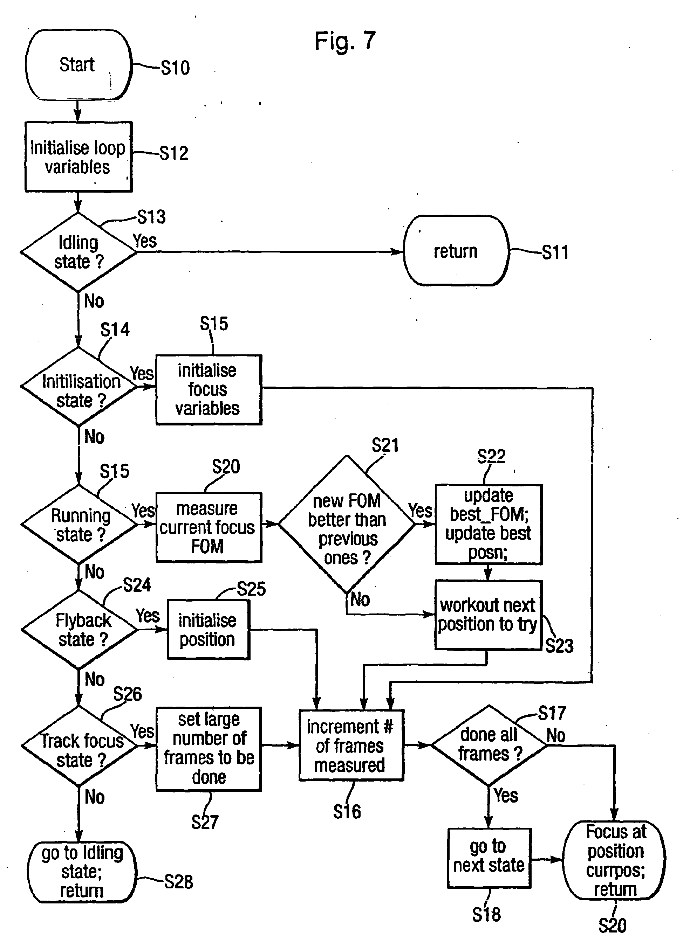

Detailed methods of performing the autofocussing step S2 are shown in Figs. 7 to 11 which are flow charts of the operation performed by the control circuit 33. These methods (and indeed the methods of Figs 3 and 5) are merely part of the operation of the entire camera 20, autofocus itself simply being one of the many operations necessary for the camera 20 to perform a useful function, the other operations possibly including, calibration of the sensitivity to light and appropriate closure of the aperture and/or change of exposure time, the "taking" of the picture (ie the final exposure to be captured and stored), and the transfer of the captured image from the image sensor 22 of the camera 20 to the memory 30. For this reason the flowcharts of Figs. 7 to 11 have START and RETURN control points S10, S11, S20 and S28. The START point S10 is where the overall or general camera control system begins the autofocus process, and the RETURN points S11, S20 and S28 is where this iteration of the autofocus process is complete and general camera control method (hereinafter the General Camera Control Method or GCCM) continues before later re-entering the autofocus control method (hereinafter the Autofocus Control Method or ACM) again.

Fig. 7 is a simplified flowchart which underlies all of the more detailed methods described subsequently.

Once the ACM is entered via the START box S10, the first operation S12 is to initialize to suitable values the loop variables that are used to control the details of the rest of the method. The ACM also has a State variable that persists from one invocation of the method to the next, although the ACM itself may change the value of the State variable. The essential point is that when the method returns control to the GCCM, the State is not lost, and unless deliberately changed by an external system e.g. the GCCM itself, the State variable will have the same value the next time the ACM is initiated.

Next in step S13 the State variable is checked and if the ACM is in Idling state (which means "do nothing") the ACM returns control directly to the GCCM.

In step S14 it is checked if instead the State is Initialisation state (which means, "prepare for a new focus measurement process cycle of operations"). If so in step S15 certain focus control variables are initialised to suitable values (including the frames variable). This corresponds to step S100 of the flow chart of Fig. 5. After this in step S16 the frames variable is incremented.

A test is then carried out in step S17 to check if all the required frames have been done. If so, the State is moved to the next state in step S18, ie the State variable value is changed. In either case in step S20 the ACM then returns control to the GCCM and passes back a value currpos which describes the current focus-lens position.

If step S14 determines the State is not Initialisation state in step S19 it is checked if instead the State is Running state. If so the measure of focus quality (referred to in the flowchart as Figure of Merit (FOM)) is determined in step S20 for the image being received by the camera 22 with the lens arrangement 21 at its current position (currpos). This newly derived FOM is then compared in step S21 with any previous FOM values determined since the last Initialisation state. If the new FOM is the best so far, then it is remembered in step S22 as a new value of best FOM so far, for future FOM comparisons. In either case, the ACM then works out how to alter the position of the lens arrangement 21 on the basis of this FOM measurement. Then the method goes to step S16 and continues as above. This corresponds to steps S10 and S102 of the flow chart of Fig. 5.

If step S19 determines the State is not Running state, it is checked in step S24 if the State is Flyback. If so, in step S25 the ACM causes the lens arrangement 21 to move to a known position. Then the method goes to step S16 and continues as above. This corresponds to steps S103 and S104 or to steps S105 and S106 of the flow chart of Fig. 5.

If step S19 determines the State is not Flyback state, it is checked in step S26 if the State is Track Focus. If so, in step S27, the frames variable is set to a large number, so that the rest of the algorithm will process many frames before it registers all required frames done. Then the method goes to step S16 and continues as above. Otherwise, if in none of the above states are dteremined, in step S28, the State is set to Idling and the GCCM is returned to.

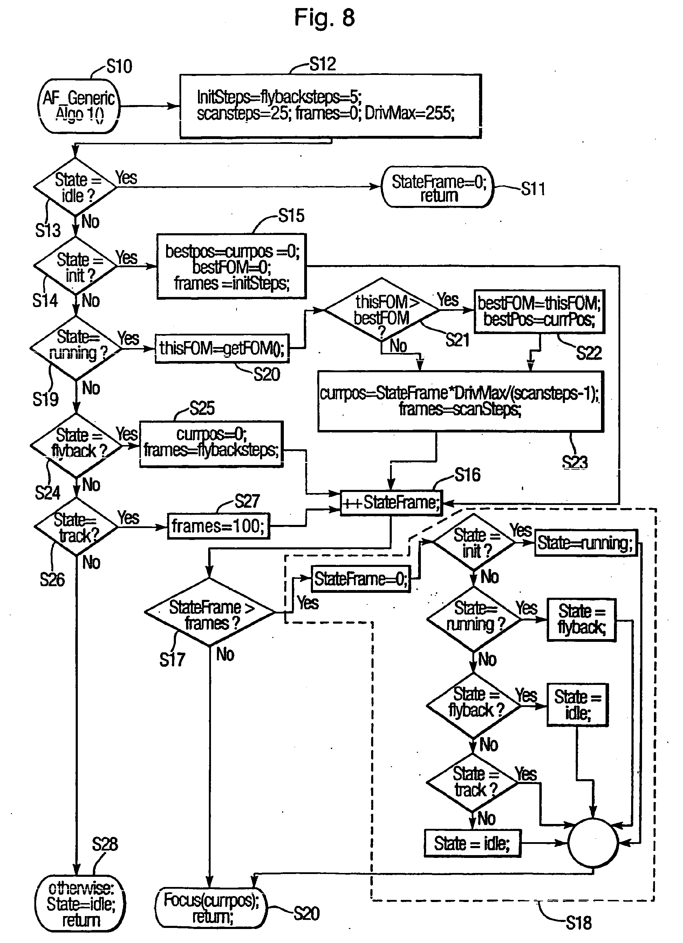

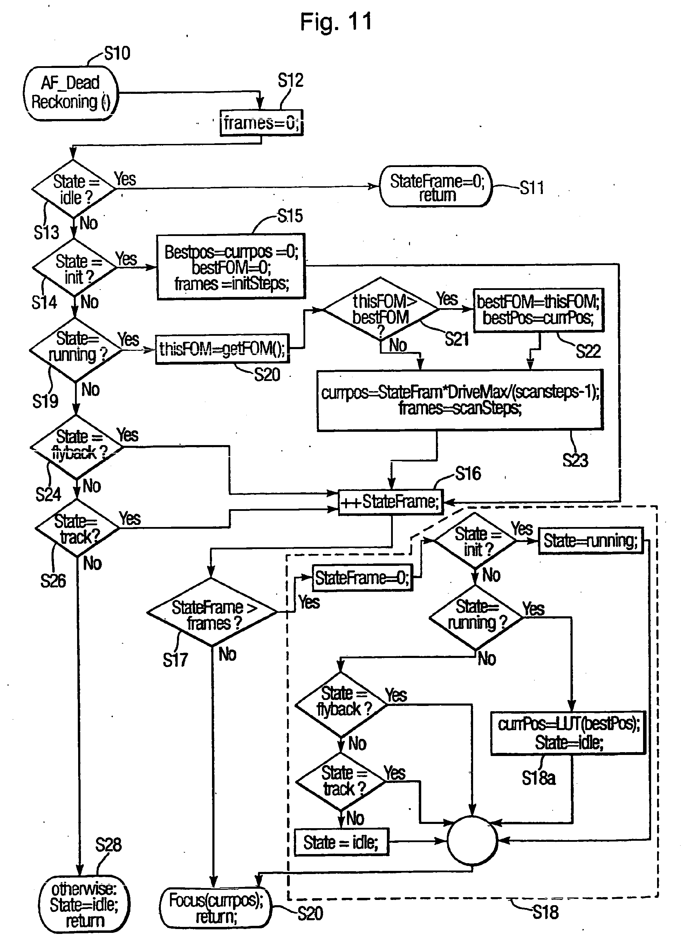

Figs. 8 to 11 show modified versions of the ACM of Fig. 7. The flowcharts of Figs. 8 to 10 implement steps S103 and S104 of Fig. 5, whereas the flowcharts of Fig. 11 implements steps S105 and S106 of Fig. 5.

Fig. 8 shows a first specific implementation in which a description of the loop variables and their initialised values can be seen. These include the number of initial steps, initSteps = 5 and flyback steps, flybackSteps = 5, the number of scan steps, scansteps = 25 , a zero value for the frames done variable frames and an upper limit for the drive value, DrivMax = 255, which is specific to each and every implementation, and simply represents the maximum allowable value for the lens position drive signal.

When the state on entry to the routine is initialisation, State = init, then specific values for the focus variables are defined in step S15 as follows: best position bestPos = 0, current position currpos = 0, best Figure of Merit bestFOM = 0, and number of frames frames = initSteps.

If in the running state, State = running, then in step S20 a current FOM value thisFOM is calculated by a call to a sub-process getFOM (described below in two preferred formats, but any suitable method of determining an FOM can be used here); this FOM is then checked in step S21 against the current best FOM, bestFOM, and if the new value is better, then bestFOM is updated in step S22 with the value of thisFOM, and the focus lens position for best FOM, bestPos is updated from the current position currPos. Then a new lens position currPos to try is calculated in step S23, and the frames variable updated.

If the system is in the flyback state, State = Flyback, then in step S25 the next lens position is set to 0, currpos = 0, and the frames variable set to a suitable value for the flyback process, =flybacksteps in this version, after which the StateFrame variable is incremented in step S16 (NB in the flowcharts the notation ++x is used to indicate that the variable x is incremented (by 1)).

If the system is in the tracking state, State = track, then in step S27 the frames variable is set to 100 in this version, before the Stateframe variable is incremented in step S16.

These latter states than pass to a test to see if all required frames are done by comparing Stateframe with frames in step S17, and if so, the system state is modified in step S18 according to its current state (init changes to running, running to flyback, flyback to Idle, Track to Track (i.e. no change) and Idle to Idle (again, no change of state)). The last action is to move the lens to the newly computed position currpos by a call to the focal lens movement control routine Focus(). If the entry state was any other state, then the state is set to Idle before returning.

In the above description all the constant values to which the various variables are set to during the process are example values that have ben found to work well, but other values are also possible and useful in real implementations and these given here are merely guides to one particular implementation and are not meant to be limiting.

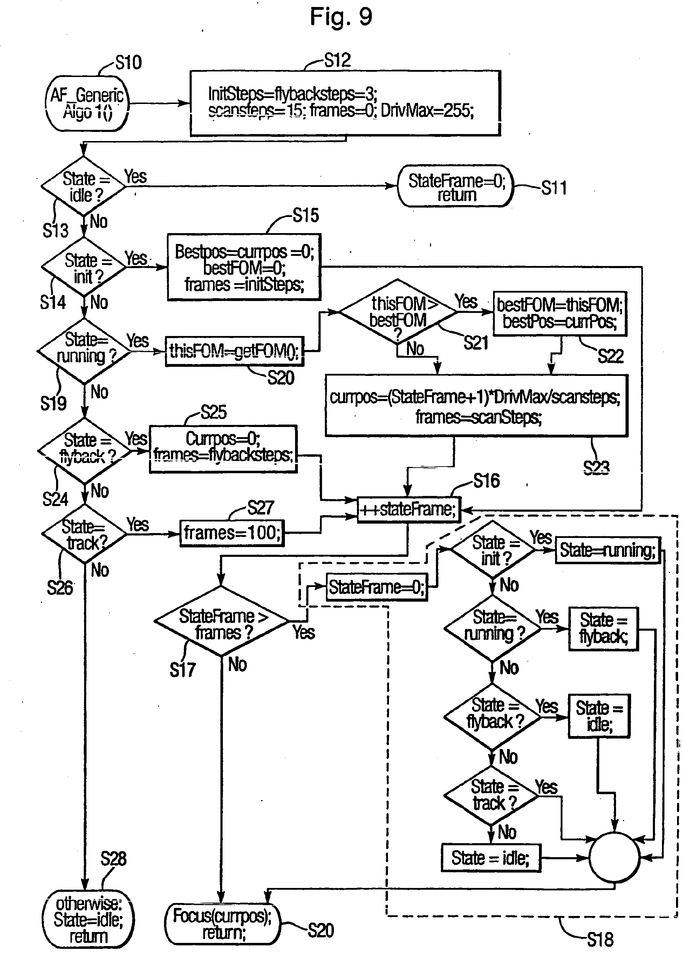

Fig. 9 shows a second variant of the basic autofocus algorithm, very similar to that in Fig. 8, the principal changes being:

(1) In the initialization step S12 initSteps = flybacksteps = 3 (instead of 5) and ScanSteps = 15 (instead of 25); and
(2) In the running state in step S23, the new position is calculated differently, that is by currpos = (StateFrame+1) *Drivemax/scansteps.

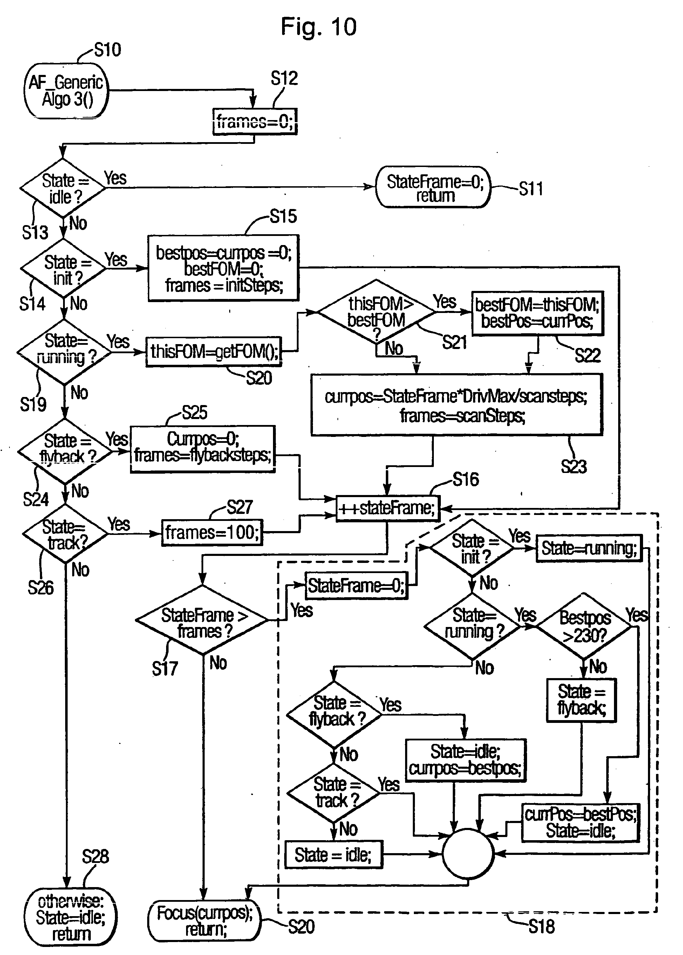

Fig. 10 shows another slight variant of the method shown in Fig. 8, the principal differences being:

(1) In the running state, in step S23 the new position is calculated differently, that is by currpos = StateFrame+Drivemax/scansteps;
(2) After the test for all frames is done in step S17, an extra test is inserted in step S18 if the state is running, to see if the best position is greater than a certain large value (in this example, bestPos > 230?), and if the test succeeds then instead of moving to flyback state instead the system moves to idle state, after resetting the next position to the latest best-position, currpos = bestPos, just prior to the instruction to move to that new position. Alternatively, if the state is flyback, then state is reset to idle and again currpos is set to bestPos.

Fig. 11 is yet another variant of autofocus control method, with an element of dead-reckoning built into it, designed to reduce the effects of any hysteresis in the actuator that converts an electrical drive signal into a mechanical position for the focal-lens. Clearly hysteresis in such a component will cause the lens to move to different positions for the same drive signal due to the previous history of mechanical and drive states, so that depending on these histories, methods ignoring hysteresis will behave differently at different times, and in general less well than if hysteresis were absent.

In Fig. 16, the principal differences from the previous methods described are that:

(1) in the tracking state, the method uses the same control state sequence as the flyback state; and
(2) after the test for all frames done has been satisfied, step S18 is modified by the inclusion of substep S18a so that if the system is in the running state, then the next new position of lens, currpos is computed by use of a look up table (LUT) using the stored bestPos value is the index into the table. This lookup table will contain pre-computed (static at design, assembly or test time, but possibly dynamically controlled values of position data, estimated to correct for the actual hysteresis of the actuator element).

The various control methods of Figs. 3, 5 and 12 to 16 are described above by way of flowcharts representing the operation of the control circuit 33. However the actual implementation of the camera 20 and these the methods in an actual camera 20 is a matter of engineering choice, and could be different, for example hard-wired control logic, a set of gates, registers and memory cells in a field programmable logic array, or a general purpose DSP (digital signal processor) or microprocessor connected to input and output circuitry, executing a program that causes the ensemble to enact the control method. Similarly other possibilities exist and may be used.

Above it is described that the control signal output by the driver 24 is a voltage signal. As an alternative the control signal may be charge signal. This may be derived for example by integration of the current applied to the actuator 23. An example of suitable charge control is disclosed in WO-02/080353. This has the advantage that the hysteresis experienced by the piezoelectric actuator 23 is greatly diminished, that is the relationship between charge signal applied to the actuator 23 and position of the lens arrangement 21 has a reduced degree of hysteresis. An that is necessary is to monitor the charge entering and leaving the piezoelectric actuator instead of monitoring the drive voltage applied to it. To a good approximation, it may be assumed that there is no hysteresis, in which case the autofocussing method shown in Fig. 5 may be applied without the fly-back step S103, but instead after step S102 immediately changing the control signal to the focus value determined in step S102. However, there may remain some hysteresis so as an alternative the autofocussing method shown in Fig. 5 may be applied in full.

The disadvantage of using a charge control signal is that the driver 24 is more complicated to implement.

In the camera 20 described above, the measure of the focus quality is the amount of data of the encoded signal output by the JPEG encoder 26 in its second mode of operation. As an alternative the camera may use a measure of the focus quality based directly on high spatial frequency content of an image, for example by high-pass filtering the image signal and then obtaining a measure of the amount of high spatial frequency components, for example by integrating the modulus of the components or by calculation of the power.

The high-pass filter may be implemented in the frequency domain. One possibility is to perform a discrete cosine transform, eg on 8×8 pixel blocks. Then the measure of focus quality might be derived by multiplying the spatial frequency components by the frequency domain filter coefficients, and then taking the sum of absolute values of the result. This approach is computationally cheaper than a power calculation and is nearly as useful.

The design of the high-pass filter is important. With the assumption that we can only work with the blocks that we are given at the output of the image sensor 22, (ie not reconstruct the original image and do spatial processing on it), the following can be said about the requirements for this filter:

- The DC coefficient must be zero as the DC signal never conveys useful focus information
- Very high frequencies are likely to be dominated by pixel noise (if this can be proved by analysis of the circle of confusion of a particular system, that would be very helpful information). These frequencies should also be attenuated.
- Intermediate frequencies will contain the useful focus information

The transition bands between these zones should not be too abrupt, otherwise they could act as a threshold, and prevent the algorithm working under some circumstances.

Designing frequency domain filters from spatial prototypes is one way to get satisfactory results. Knowing what convolution operation is needed in the spatial domain, this can be transformed into a frequency domain multiplication.

One possible high-pass filter is the Laplacian of a Gaussian filter as described above. This method in its entirety produces quite satisfactory results and compares well in simulation with other methods (some frequency based, some spatial based).

Of course many variations to the embodiments described above are possible within the scope of the present invention. Some examples of variations will now be described, but these are not limitative.

The measure of focus quality may be generated from the entire area of the image of from one or more predetermined parts of the area of the image. In the case of using plural parts of the area of the image, the region with the best discrimination of focus may be selected, or an overall measure could be derived from the measures for each part, for example by a weighted sum

Some of the arrangements described above use a piezoelectric actuator at part of the focus control, in particular to drive movement of a variable focus lens arrangement. With such a piezoelectric actuator, relatively high drive voltages are typically required to activate the piezoelectric material, because such materials typically require drive electric fields of between 500V/mm to several thousand volts per millimetre, and because very thin piezoelectric layers (say $20\mu$m to $60\mu$m or even less) are technically difficult to achieve. So for example, a material requiring 1000V/mm drive filed and where the layers are $100\mu$m thick requires a drive voltage of 100V. In portable and other battery operated equipment such high voltages are generally unavailable and it becomes necessary to generate these voltages from the low battery voltages commonly available (e.g. between 2V and 6V). It is further necessary to control the high voltage drive to the actuator, with some kind of high-voltage amplifier.

In a portable device such as a mobile-phone or cell-phone, a portable digital assistant (PDA), a laptop computer or a portable hard drive storage device, the cost of components, space taken up by components and weight of components are critical items for the acceptance of any devices in these applications. Most standard semiconductor ASIC processes are optimised for low voltage circuitry so it is in practice difficult to integrate the high voltage generator circuitry and/or the high voltage drive amplifier circuitry, within other silicon integrated circuits inside the portable device.

To solve this problem, it is possible to provide a single small silicon integrated circuit incorporating (1) all the necessary semiconductor elements required for the conversion of a low voltage battery supply (typically less than 12V, or less than 6V, or even less,than 3V or 2V) to a high voltage adequate to supply a high voltage amplifier for driving a piezoelectric actuator device (typically more than 12V, or more preferably more than 20V, or even more preferably more than 40V or even more than 75V) and (2) all the semiconductor elements required to provide the high-voltage amplification required to directly drive the piezoelectric element. Such a composite voltage step-up and amplifier/controller may be optimised for very low power consumption ( typically less than 250mW or preferably less than 100mW or more preferably still less than 50mW or even less than 20mW). It may also have a very small package size (typically less than 10mm square or preferably less than 5mm square or more preferably less than 3mm square or even less than 2 or 1mm square). Such a silicon chip may be applied to any of the embodiments described above which employ a piezoelectric actuator. In general it may be applied to any portable electronic device which employs a piezoelectric actuator for any purpose.

## Claims

1. A method of focussing a lens arrangement (21) in a camera (20) which further comprises an image sensor (22) onto which an image is focussed by the lens arrangement (21) and a piezoelectric actuator (23) arranged to drive movement of the lens arrangement (21) in accordance with a control signal applied thereto to vary the focus of die image on the image sensor (22), the piezoelectric actuator (23) experiencing hysteresis in the position to which it drives the lens arrangement (21) as a function of the control signal,
   **characterised by** the method comprising:

   applying a control signal to the piezoelectric actuator (23) with a value at an extreme of a predetermined range;
   changing the control signal monotonically across the predetermined range and at each of a plurality of test values of the control signal during the change of the control signal determining a respective measure of the quality of the focus of the image from the image signal output by the image sensor (22);
   determining, from said respective measures of the quality of the focus of the image, a focus value of the control signal at which the quality of the focus of the image is at an acceptable level;
   changing the control signal back to said value at an extreme of said predetermined range; and
   changing the control signal monotonically to said focus value.

2. A method according to claim 1, wherein said determining of a focus value of the control signal comprises selecting one of said test values of the control signal.

3. A method according to claim 2, wherein said selecting of one of said values of the control signal comprises selecting the one of said values at which the measure of the quality of the focus of the image is best.

4. A method according to any one of the preceding claims, wherein the control signal is a voltage signal.

5. A method according to any one of claims 1 to 3, wherein the control signal is a charge signal.

**6.** A method according to any one of the preceding claims, wherein said method is performed repeatedly using the same predetermined range.

**7.** A camera (20) comprising:

an image sensor (22);
a lens arrangement (21) which focusses an image onto the image sensor (22);
a piezoelectric actuator (23) arranged to drive movement of the lens arrangement (21) in accordance with a control signal applied thereto to vary the focus of the image on the image sensor (22), the piezoelectric actuator (23) experiencing hysteresis in the position to which it drives the lens arrangement (21) as a function of the control signal; and
a control circuit (33, 24) arranged to apply the control signal to the piezoelectric actuator, (23) and being operable to automatically focus the image,
**characterised in that** the control circuit (33, 24) is operable to automatically focus the image by:

applying a control signal with a value at an extreme of a predetermined range;
changing the control signal monotonically across the predetermined range and at each of a plurality of test values of the control signal during the change of the control signal determining a respective measure of the quality of the focus of the image from the image signal output by the image sensor (22);
determining, from said respective measures of the quality of the focus of the image, a focus value of the control signal at which the quality of the focus of the image is at an acceptable level;
changing the control signal back to said value at an extreme of said predetermined range; and
changing the control signal monotonically to said focus value.

**8.** A camera according to claim 7, wherein said determining of a focus value of the control signal comprises selecting one of said test values of the control signal;

**9.** A camera according to claim 8, wherein said selecting of one of said values of the control signal comprises selecting the one of said values at which the measure of the quality of the focus of the image is best.

**10.** A camera according to any one of claims 7 to 9, wherein the control signal is a voltage signal.

**11.** A camera according to any one of claims 7 to 9, wherein the control signal is a charge signal.

**12.** A camera according to any one of claims 7 to 11, wherein the control circuit (33, 24) is operable to automatically focus the image repeatedly by said steps using the same predetermined range.

**13.** A method of focussing a lens arrangement (21) in a camera (20) which further comprises an image sensor (22) onto which an image is focussed by the lens arrangement (21) and a piezoelectric actuator (23) arranged to drive movement of the lens arrangement (21) in accordance with a control signal applied thereto to vary the focus of the image on the image sensor (23), the piezoelectric actuator experiencing hysteresis in the position to which it drives the lens arrangement (21) as a function of the control signal,
**characterised by** the method comprising:

applying a control signal to the piezoelectric actuator (23) with a value at an extreme of a predetermined range;
changing the control signal monotonically across the predetermined range and at each of a plurality of values of the control signal during the change of the control signal determining a respective measure of the quality of the focus of the image from the image signal output by the image sensor (22);
determining, from said respective measures of the quality of the focus of the image, a focus value of the control signal at which the quality of the focus of the image is at an acceptable level;
determining a modified value of the control signal which is capable, by monotonic change of the control signal to the modified value, of moving the lens arrangement to the position at which it was located when the control signal was at the focus value of the control signal, taking into account the hysteresis of the piezoelectric actuator; and
changing the control signal monotonically to said modified value.

**14.** A method according to claim 13, wherein said determining of a focus value of the control signal comprises selecting one of said test values of the control signal.

**15.** A method according to claim 14, wherein said selecting of one of said values of the control signal comprises selecting the one of said values at which the measure of the quality of the focus of the image is best.

**16.** A method according to any one of claims 13 to 15, wherein the control signal is a voltage signal.

**17.** A method according to any one of claims 13 to 15, wherein the control signal is a charge signal.

**18.** A method according to any one of claims 13 to 17, wherein said method is performed repeatedly using the same predetermined range.

**19.** A camera (20) comprising:

an image sensor (22);
a lens arrangement (21) which focusses an image onto the image sensor (22);
a piezoelectric actuator (23) arranged to drive movement of the lens arrangement (21) in accordance with a control signal applied thereto to vary the focus of the image on the image sensor (22), the piezoelectric actuator (23) experiencing hysteresis in the position to which it drives the lens arrangement (21) as a function of the control signal; and
a control circuit (33, 24) arranged to apply the control signal to the piezoelectric actuator (23) and being operable to automatically focus the image,
**characterised in that** the control circuit (33, 24) is operable to automatically focus the image by:

applying a control signal to the piezoelectric actuator (23) with a value at an extreme of a predetermined range;
changing the control signal monotonically across the predetermined range and at each of a plurality of values of the control signal during the change of the control signal determining a respective measure of the quality of the focus of the image from the image signal output by the image sensor (22);
determining, from said respective measures of the quality of the focus of the image, a focus value of the control signal at which the quality of the focus of the image is at an acceptable level;
determining a modified value of the control signal which is capable, by monotonic change of the control signal to the modified value, of moving the lens arrangement (21) to the position at which it was located when the control signal was at the focus value of the control signal, taking into account the hysteresis of the piezoelectric actuator (23); and
changing the control signal monotonically to said modified value.

**20.** A camera according to claim 19, wherein said determining of a focus value of the control signal comprises selecting one of said test values of the control signal.

**21.** A camera according to claim 20, wherein said selecting of one of said values of the control signal comprises selecting the one of said values at which the measure of the quality of the focus of the image is best.

**22.** A camera according to any one of claims 19 to 21, wherein the control signal is a voltage signal.

**23.** A camera according to any one of claims 19 to 22, wherein the control signal is a charge signal.

**24.** A camera according to any one of claims 19 to 23, wherein the control circuit (33, 24) is operable to automatically focus the image repeatedly by said steps using the same predetermined range.

**Patentansprüche**

**1.** Verfahren zum Fokussieren einer Linsenanordnung (21) in einer Kamera (20), die ferner einen Bildsensor (22) enthält, auf den ein Bild durch die Linsenanordnung (21) fokussiert wird, und einen piezoelektrischen Aktuator (23), der angeordnet ist zum Betreiben einer Bewegung der Linsenanordnung (21) gemäß einem Steuerungssignal, das an ihn angelegt wird, zum Ändern der Bildschärfe des Bilds auf dem Bildsensor (22), wobei der piezoelektrische Aktuator (23) an der Position, an die er die Linsenanordnung (21) als Funktion des Steuerungssignals führt, eine Hysteresis erfährt,
**gekennzeichnet durch** das Verfahren, das aufweist:

Anlegen eines Steuerungssignals an den piezoelektrischen Aktuator (23) mit einem Wert bei einem Extrem eines vorbestimmten Bereichs;

monotones Ändern des Steuerungssignals über den vorbestimmten Bereich, und bei jedem von einer Mehrzahl von Testwerten des Steuerungssignals während der Änderung des Steuerungssignals, Bestimmen eines entsprechenden Maßes der Qualität der Bildschärfe des Bilds aus dem von dem Bildsensor (22) ausgegebenen Bildsignal;

Bestimmen eines Bildschärfewerts des Steuerungssignals aus den jeweiligen Maßen der Mehrzahl von Bildschärfen des Bilds, bei dem die Qualität der Bildschärfe des Bilds bei einem akzeptablen Niveau ist;

Ändern des Steuerungssignals zurück auf den Wert bei einem Extrem des vorbestimmten Bereichs; und

monotones Ändern des Steuerungssignals auf den Bildschärfewert.

2. Verfahren nach Anspruch 1, bei dem das Bestimmen eines Bildschärfewerts des Steuerungssignals ein Auswählen von einem der Testwerte des Steuerungssignals aufweist.

3. Verfahren nach Anspruch 2, bei dem das Auswählen von einem von den Werten des Steuerungssignals ein Auswählen des einen von den Werten aufweist, bei dem das Maß der Qualität der Bildschärfe des Bilds am Besten ist.

4. Verfahren nach einem der vorangegangenen Ansprüche, bei dem das Steuerungssignal ein Spannungssignal ist.

5. Verfahren nach einem der Ansprüche 1 bis 3, bei dem das Steuerungssignal ein Ladesignal ist.

6. Verfahren nach einem der vorangegangenen Ansprüche, bei dem das Verfahren unter Verwendung des gleichen vorbestimmten Bereichs wiederholt durchgeführt wird.

7. Kamera (20) mit:

einem Bildsensor (22);

einer Linsenanordnung (21), die ein Bild auf den Bildsensor (22) fokussiert;

einem piezoelektrischen Aktuator (23), der angeordnet ist zum Betreiben einer Bewegung der Linsenanordnung (21) gemäß einem Steuerungssignal, das an ihn angelegt wird, um die Bildschärfe des Bilds auf dem Bildsensor (22) zu ändern, wobei der piezoelektrische Aktuator (23) an der Position, an die er die Linsenanordnung (21) als Funktion des Steuerungssignals führt, eine Hysteresis erfährt; und

einer Steuerungsschaltung (33, 24), die angeordnet ist zum Anlegen des Steuerungssignals an den piezoelektrischen Aktuator (23), und die betreibbar ist zum automatischen Fokussieren des Bilds,

**dadurch gekennzeichnet, dass** die Steuerungsschaltung (33, 24) betreibbar ist zum automatischen Fokussieren des Bilds durch:

Anlegen eines Steuerungssignals mit einem Wert bei einem Extrem eines vorbestimmten Bereichs;

monotones Ändern des Steuerungssignals über den vorbestimmten Bereich, und bei jedem von einer Mehrzahl von Testwerten des Steuerungssignals während der Änderung des Steuerungssignals, Bestimmen eines jeweiligen Maßes der Qualität der Bildschärfe des Bilds aus dem von dem Bildsensor (22) ausgegebenen Bildsignal;

Bestimmen eines Bildschärfewerts des Steuerungssignals, aus den jeweiligen Maßen der Qualität der Bildschärfe des Bilds, bei dem die Qualität der Bildschärfe des Bilds bei einem akzeptablen Niveau ist;

Ändern des Steuerungssignals zurück auf den Wert bei einem Extrem des vorbestimmten Bereichs; und

monotones Ändern des Steuerungssignals auf den Bildschärfewert.

8. Kamera nach Anspruch 7, bei der das Bestimmen eines Bildschärfewerts des Steuerungssignals ein Auswählen von einem der Testwerte des Steuerungssignals aufweist.

9. Kamera nach Anspruch 8, bei dem das Auswählen von einem von den Werten des Steuerungssignals ein Auswählen des einen von den Werten aufweist, bei dem das Maß der Qualität der Bildschärfe des Bilds am Besten ist.

10. Kamera nach einem der Ansprüche 7 bis 9, bei der das Steuerungssignal ein Spannungssignal ist.

11. Kamera nach einem der Ansprüche 7 bis 9, bei der das Steuerungssignal ein Ladesignal ist.

12. Kamera nach einem der Ansprüche 7 bis 11, bei der die Steuerungsschaltung (33, 24) betreibbar ist zum wiederholten automatischen Fokussieren des Bilds durch die Schritte unter Verwendung des gleichen vorbestimmten Bereichs.

13. Verfahren zum Fokussieren einer Linsenanordnung (21) in einer Kamera (20), die ferner einen Bildsensor (22), auf den ein Bild durch die Linsenanordnung (21) fokussiert wird, und einen piezoelektrischen Aktuator (23) aufweist, der angeordnet ist zum Betreiben einer Bewegung der Linsenanordnung (21) gemäß einem Steuerungssignal, das an ihn angelegt wird, um die Bildschärfe des Bilds auf dem Bildsensor (23) zu ändern, wobei der piezoelektrische Aktuator an der Position, an die er die Linsenanordnung (21) als Funktion des Steuerungssignals führt, eine Hysteresis erfährt,
**gekennzeichnet durch** das Verfahren, das aufweist:

Anlegen eines Steuerungssignals an den piezoelektrischen Aktuator (23) mit einem Wert bei einem Extrem eines vorbestimmten Bereichs;
monotones Ändern des Steuerungssignals über den vorbestimmten Bereich, und bei jedem von einer Mehrzahl von Werten des Steuerungssignals während der Änderung des Steuerungssignals, Bestimmen eines jeweiligen Maßes der Qualität der Bildschärfe des Bilds aus dem von dem Bildsensor (22) ausgegebenen Bildsignal;
Bestimmen eines Bildschärfewerts des Steuerungssignals aus den jeweiligen Maßen der Qualität der Bildschärfe des Bilds, bei dem die Qualität der Bildschärfe des Bilds bei einem akzeptablen Niveau ist;
Bestimmen eines modifizierten Werts des Steuerungssignals, das in der Lage ist, **durch** monotones Ändern des Steuerungssignals auf den modifizierten Wert, die Linsenanordnung an die Position zu bewegen, an der sie sich befand, als das Steuerungssignal auf dem Bildschärfewert des Steuerungssignals war, unter Berücksichtigung der Hysteresis des piezoelektrischen Aktuators; und
monotones Ändern des Steuerungssignals auf den modifizierten Wert.

14. Verfahren nach Anspruch 13, bei dem das Bestimmen eines Bildschärfewerts des Steuerungssignals ein Auswählen von einem von den Testwerten des Steuerungssignals aufweist.

15. Verfahren nach Anspruch 14, bei dem das Auswählen von einem der Werte des Steuerungssignals ein Auswählen des einen der Werte aufweist, bei dem das Maß der Qualität der Bildschärfe des Bilds am Besten ist.

16. Verfahren nach einem der Ansprüche 13 bis 15, bei dem das Steuerungssignal ein Spannungssignal ist.

17. Verfahren nach einem der Ansprüche 13 bis 15, bei dem das Steuerungssignal ein Ladesignal ist.

18. Verfahren nach einem der Ansprüche 13 bis 17, bei dem das Verfahren unter Verwendung des gleichen vorbestimmten Bereichs wiederholt durchgeführt wird.

19. Kamera (20) mit:

einem Bildsensor (22);
einer Linsenanordnung (21), die ein Bild auf den Bildsensor (22) fokussiert;
einem piezoelektrischen Aktuator (23), der angeordnet ist zum Betreiben einer Bewegung der Linsenanordnung (21) gemäß einem Steuerungssignal, das an ihn angelegt wird, um die Bildschärfe des Bilds auf dem Bildsensor (22) zu ändern, wobei der piezoelektrische Aktuator (23) an der Position, an die er die Linsenanordnung (21) als Funktion des Steuerungssignals führt, eine Hysteresis erfährt; und
einer Steuerungsschaltung (33, 24), die angeordnet ist zum Anlegen des Steuerungssignals an den piezoelektrischen Aktuator (23), und die betreibbar ist zum automatischen Fokussieren des Bilds,
**dadurch gekennzeichnet, dass** die Steuerungsschaltung (33, 24) betreibbar ist zum automatischen Fokussieren des Bilds durch:

Anlegen eines Steuerungssignals an den piezoelektrischen Aktuator (23) mit einem Wert bei einem Extrem eines vorbestimmten Bereichs;
monotones Ändern des Steuerungssignals über den vorbestimmten Bereich, und bei jedem von einer Mehrzahl von Werten des Steuerungssignals während des Änderns des Steuerungssignals, Bestimmen eines jeweiligen Maßes der Qualität der Bildschärfe des Bilds aus dem von dem Bildsensor (22) ausgegebenen Bildsignal;
Bestimmen eines Bildschärfewerts des Steuerungssignals aus den jeweiligen Maßen der Qualität der Bildschärfe des Bilds, bei dem die Qualität der Bildschärfe des Bilds bei einem akzeptablen Niveau ist;
Bestimmen eines modifizierten Werts des Steuerungssignals, das in der Lage ist durch monotones Ändern des Steuerungssignals auf den modifizierten Wert die Linsenanordnung (21) an die Position zu bewegen, bei der sie sich befand, als das Steuerungssignal auf dem Bildschärfewert des Steuerungssignals war, unter Berücksichtigung der Hysteresis des piezoelektrischen Aktuators (23); und

monotones Ändern des Steuerungssignals auf den modifizierten Wert.

**20.** Kamera nach Anspruch 19, bei der das Bestimmen eines Fokuswerts des Steuerungssignals ein Auswählen von einem der Testwerte des Steuerungssignals aufweist.

**21.** Kamera nach Anspruch 20, bei der das Auswählen von einem von den Werten des Steuerungssignals ein Auswählen des einen von den Werten aufweist, bei dem das Maß der Qualität der Bildschärfe des Bilds am Besten ist.

**22.** Kamera nach einem der Ansprüche 19 bis 21, bei der das Steuerungssignal ein Spannungssignal ist.

**23.** Kamera nach einem der Ansprüche 19 bis 22, bei der das Steuerungssignal ein Ladesignal ist.

**24.** Kamera nach einem der Ansprüche 19 bis 23, bei der die Steuerungsschaltung (33, 24) betreibbar ist zum wiederholten automatischen Fokussieren des Bilds durch die Schritte unter Verwendung des gleichen vorbestimmten Bereichs.

**Revendications**

**1.** Procédé de mise au point d'un agencement de lentilles (21) dans une caméra (20) comprenant en outre un capteur d'image (22) sur lequel une image est mise au point par l'agencement de lentilles (21) et un dispositif d'actionnement piézo-électrique (23) agencé pour entraîner le mouvement de l'agencement de lentilles (21) en fonction d'un signal de commande qui lui est appliqué pour faire varier la mise au point de l'image sur le capteur d'image (22), le dispositif d'actionnement piézo-électrique (23) étant soumis à un hystérésis dans la position dans laquelle il entraîne l'agencement de lentilles (21) en fonction du signal de commande,
**caractérisé en ce que** le procédé comprend :

l'application au dispositif d'actionnement piézo-électrique (23) d'un signal de commande d'une valeur située à une extrémité d'une plage prédéterminée ;
la variation monotone du signal de commande d'un bout à l'autre de la plage prédéterminée et pour chacune des valeurs d'une pluralité de valeurs d'essai du signal de commande pendant la variation du signal de commande, la détermination d'une mesure respective de la qualité de la mise au point de l'image à partir du signal d'image délivré en sortie par le capteur d'image (22) ;
la détermination, d'après lesdites mesures respectives de la qualité de la mise au point de l'image, d'une valeur de mise au point du signal de commande pour laquelle la qualité de la mise au point de l'image est à un niveau acceptable ;
le retour du signal de commande à ladite valeur à une extrémité de ladite plage prédéterminée ; et
la variation monotone du signal de commande jusqu'à ladite valeur de mise au point.

**2.** Procédé selon la revendication 1, dans lequel ladite détermination d'une valeur de mise au point du signal de commande comprend la sélection de l'une desdites valeurs d'essai du signal de commande.

**3.** Procédé selon la revendication 2, dans lequel ladite sélection de l'une desdites valeurs du signal de commande comprend la sélection de la valeur parmi lesdites valeurs à laquelle la mesure de la qualité de la mise au point de l'image est la meilleure.

**4.** Procédé selon l'une quelconque des revendications précédentes, dans lequel le signal de commande est un signal de tension.

**5.** Procédé selon l'une quelconque des revendications 1 à 3, dans lequel le signal de commande est un signal de charge.

**6.** Procédé selon l'une quelconque des revendications précédentes, dans lequel ledit procédé est exécuté de manière répétée en utilisant la même plage prédéterminée.

**7.** Caméra (20) comprenant :

un capteur d'image (22) ;
un agencement de lentilles (21) qui met au point une image sur le capteur d'image (22) ;
un dispositif d'actionnement piézo-électrique (23) agencé pour entraîner le mouvement de l'agencement de lentilles (21) en fonction d'un signal de commande qui lui est appliqué pour faire varier la mise au point de l'image sur le capteur d'image (22), le dispositif d'actionnement piézo-électrique (23) étant soumis à un hystérésis dans la position dans laquelle il entraîne l'agencement de lentilles (21) en fonction du signal de commande ; et
un circuit de commande (33, 24) agencé pour appliquer le signal de commande au dispositif d'actionnement piézo-électrique (23) et pouvant être actionné pour mettre l'image au point automatiquement, **caractérisé en ce que** le circuit de commande (33, 24) peut être actionné pour mettre l'image au point automatiquement par :

application d'un signal de commande d'une valeur située à une extrémité d'une plage prédéterminée ;
variation monotone du signal de commande d'un bout à l'autre de la plage prédéterminée et pour chacune des valeurs d'une pluralité de valeurs d'essai du signal de commande pendant la variation du signal de commande, détermination d'une mesure respective de la qualité de la mise au point de l'image à partir du signal d'image délivré en sortie par le capteur d'image (22) ;
détermination, d'après lesdites mesures respectives de la qualité de la mise au point de l'image, d'une valeur de mise au point du signal de commande pour laquelle la qualité de la mise au point de l'image est à un niveau acceptable ;
retour du signal de commande à ladite valeur à une extrémité de ladite plage prédéterminée ; et
variation monotone du signal de commande jusqu'à ladite valeur de mise au point.

8. Caméra selon la revendication 7, dans laquelle ladite détermination d'une valeur de mise au point du signal de commande comprend la sélection de l'une desdites valeurs d'essai du signal de commande.

9. Caméra selon la revendication 8, dans laquelle ladite sélection de l'une desdites valeurs du signal de commande comprend la sélection de la valeur parmi lesdites valeurs à laquelle la mesure de la qualité de la mise au point de l'image est la meilleure.

10. Caméra selon l'une quelconque des revendications 7 à 9, dans laquelle le signal de commande est un signal de tension.

11. Caméra selon l'une quelconque des revendications 7 à 9, dans laquelle le signal de commande est un signal de charge.

12. Caméra selon l'une quelconque des revendications 7 à 11, dans laquelle le circuit de commande (33, 24) peut être actionné pour effectuer automatiquement la mise au point de l'image de manière répétée par lesdites étapes en utilisant la même plage prédéterminée.

13. Procédé de mise au point d'un agencement de lentilles (21) dans une caméra (20) comprenant en outre un capteur d'image (22) sur lequel une image est mise au point par l'agencement de lentilles (21) et un dispositif d'actionnement piézo-électrique (23) agencé pour entraîner le mouvement de l'agencement de lentilles (21) en fonction d'un signal de commande qui lui est appliqué pour faire varier la mise au point de l'image sur le capteur d'image (23), le dispositif d'actionnement piézo-électrique étant soumis à un hystérésis dans la position dans laquelle il entraîne l'agencement de lentilles (21) en fonction du signal de commande, **caractérisé en ce que** le procédé comprend :

l'application au dispositif d'actionnement piézo-électrique (23) d'un signal de commande d'une valeur située à une extrémité d'une plage prédéterminée ;
la variation monotone du signal de commande d'un bout à l'autre de la plage prédéterminée et pour chacune des valeurs d'une pluralité de valeurs du signal de commande pendant la variation du signal de commande, la détermination d'une mesure respective de la qualité de la mise au point de l'image à partir du signal d'image délivré en sortie par le capteur d'image (22) ;
la détermination, d'après lesdites mesures respectives de la qualité de la mise au point de l'image, d'une valeur de mise au point du signal de commande pour laquelle la qualité de la mise au point de l'image est à un niveau acceptable ;
la détermination d'une valeur modifiée du signal de commande qui est capable, en faisant varier de façon monotone le signal de commande jusqu'à la valeur modifiée, d'amener l'agencement de lentilles dans la position dans laquelle il était situé lorsque le signal de commande était à la valeur de mise au point du signal de commande, en tenant compte de l'hystérésis du dispositif d'actionnement piézo-électrique ; et
la variation monotone du signal de commande jusqu'à ladite valeur modifiée.

14. Procédé selon la revendication 13, dans lequel ladite détermination d'une valeur de mise au point du signal de commande comprend la sélection de l'une desdites valeurs d'essai du signal de commande.

15. Procédé selon la revendication 14, dans lequel ladite sélection de l'une desdites valeurs du signal de commande comprend la sélection de la valeur parmi lesdites valeurs à laquelle la mesure de la qualité de la mise au point de l'image est la meilleure.

16. Procédé selon l'une quelconque des revendications 13 à 15, dans lequel le signal de commande est un signal de tension

17. Procédé selon l'une quelconque des revendications 13 à 15, dans lequel le signal de commande est un signal de charge

18. Procédé selon l'une quelconque des revendications 13 à 17, dans lequel ledit procédé est exécuté de manière répétée en utilisant la même plage prédéterminée.

19. Caméra (20) comprenant :

un capteur d'image (22) ;
un agencement de lentilles (21) qui met au point une image sur le capteur d'image (22) ;
un dispositif d'actionnement piézo-électrique (23) agencé pour entraîner le mouvement de l'agencement de lentilles (21) en fonction d'un signal de commande qui lui est appliqué pour faire varier la mise au point de l'image sur le capteur d'image (22), le dispositif d'actionnement piézo-électrique (23) étant soumis à un hystérésis dans la position dans laquelle il entraîne l'agencement de lentilles (21) en fonction du signal de commande ; et
un circuit de commande (33, 24) agencé pour appliquer le signal de commande au dispositif d'actionnement piézo-électrique (23) et pouvant être actionné pour mettre l'image au point automatiquement,
**caractérisé en ce que** le circuit de commande (33, 24) peut être actionné pour mettre l'image au point automatiquement par :

application au dispositif d'actionnement piézo-électrique (23) d'un signal de commande d'une valeur située à une extrémité d'une plage prédéterminée ;
variation monotone du signal de commande d'un bout à l'autre de la plage prédéterminée et pour chacune des valeurs d'une pluralité de valeurs du signal de commande pendant la variation du signal de commande, détermination d'une mesure respective de la qualité de la mise au point de l'image à partir du signal d'image délivré en sortie par le capteur d'image (22) ;
détermination, d'après lesdites mesures respectives de la qualité de la mise au point de l'image, d'une valeur de mise au point du signal de commande pour laquelle la qualité de la mise au point de l'image est à un niveau acceptable ;
détermination d'une valeur modifiée du signal de commande qui est capable, en faisant varier de façon monotone le signal de commande jusqu'à la valeur modifiée, d'amener l'agencement de lentilles (21) dans la position dans laquelle il était situé lorsque le signal de commande était à la valeur de mise au point du signal de commande, en tenant compte de l'hystérésis du dispositif d'actionnement piézo-électrique (23) ; et
variation monotone du signal de commande jusqu'à ladite valeur modifiée.

20. Caméra selon la revendication 19, dans laquelle ladite détermination d'une valeur de mise au point du signal de commande comprend la sélection de l'une desdites valeurs d'essai du signal de commande.

21. Caméra selon la revendication 20, dans laquelle ladite sélection de l'une desdites valeurs du signal de commande comprend la sélection de la valeur parmi lesdites valeurs à laquelle la mesure de la qualité de la mise au point de l'image est la meilleure.

22. Caméra selon l'une quelconque des revendications 19 à 21, dans laquelle le signal de commande est un signal de tension.

**23.** Caméra selon l'une quelconque des revendications 19 à 22, dans laquelle le signal de commande est un signal de charge.

**24.** Caméra selon l'une quelconque des revendications 19 à 23, dans laquelle le circuit de commande (33, 24) peut être actionné pour effectuer automatiquement la mise au point de l'image de manière répétée par lesdites étapes en utilisant la même plage prédéterminée.

# Fig.1.

# Fig.3.

Fig.2.

**Fig.4.**

Position

Control Signal

**Fig.5.**

S100 — Apply $S_{min}$ (or $S_{max}$)

S101 — Scan and Test

S102 — Select Best

S103 — Fly back to $S_{min}$

S104 — Scan to Best

Determine Modified Control Signal — S105

Scan to Modified Control Signal — S106

**Fig.6.**

Position

$P_{max}$

91

$P_d$
$P_{min}$

90

$S_{min}$ $S_m$       $S_d$        $S_{max}$  Control signal

## Fig. 7

Start —S10

Initialise loop variables —S12

Idling state ? —S13
Yes → return —S11

No

Initilisation state ? —S14
Yes → initialise focus variables —S15

No

Running state ? —S15
Yes → measure current focus FOM —S20 → new FOM better than previous ones ? —S21
Yes → update best_FOM; update best posn; —S22 → workout next position to try —S23
No →

No

Flyback state ? —S24
Yes → initialise position —S25

No

Track focus state ? —S26
Yes → set large number of frames to be done —S27 → increment # of frames measured —S16 → done all frames ? —S17
No →
Yes → go to next state —S18 → Focus at position currpos; return —S20

No

go to Idling state; return —S28

## Fig. 8

## Fig. 9

S10

**AF_Generic Algo1()**

S12

InitSteps=flybacksteps=3; scansteps=15; frames=0; DrivMax=255;

**State = idle ?** — Yes → StateFrame=0; return — S11

S13 — No

**State = init ?** — Yes → S15 Bestpos=currpos=0; bestFOM=0; frames=initSteps;

S14 — No

**State = running ?** — Yes → thisFOM=getFOM(); — S20

S19 — No

**thisFOM > bestFOM ?** — Yes → bestFOM=thisFOM; bestPos=currPos; — S22

S21 — No

currpos=(StateFrame+1)*DrivMax/scansteps; frames=scanSteps; — S23

**State = flyback ?** — Yes → S25 Currpos=0; frames=flybacksteps;

S24 — No

**State = track?** — Yes → frames=100; — S27

S26 — No

S16 ++stateFrame;

**StateFrame > frames ?** — Yes → StateFrame=0;

S17 — No

**State = init ?** — Yes → State=running;

No

**State = running ?** — Yes → State = flyback;

No

**State = flyback ?** — Yes → State = idle;

No

**State = track ?** — Yes

No

State = idle;

S18

S28

**otherwise: State=idle; return**

**Focus(currpos); return;** — S20

## Fig. 10

## Fig. 11

**EP 1 730 587 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0147041 A
- WO 02103451 A
- US 4470683 A
- WO 2005003834 A
- WO 02080353 A